# EUROPÄISCHE PATENTSCHRIFT

(11) **EP 3 084 099 B1**
(45) Veröffentlichungstag und Bekanntmachung des Hinweises auf die Patenterteilung: **14.08.2019**
(21) Anmeldenummer: 14828013.4
(22) Anmeldetag: 17.12.2014
(51) Int. Cl.: E04F 15/02, B44C 5/04, B32B 27/32, B32B 21/12, B32B 38/00, B32B 21/02, B32B 27/08, B32B 27/40, B32B 37/12, B32B 7/12, E04F 15/10, B32B 21/08

(54) **LAMINATFUSSBODENELEMENT**
LAMINATED FLOOR ELEMENT
ELEMENT DE PLANCHER LAMINÉ

(30) Priorität: 22.12.2013 DE 102013021779
(43) Veröffentlichungstag der Anmeldung: 26.10.2016
(73) Patentinhaber: RKW SE, 67227 Frankenthal (DE); Surteco SE, 86647 Buttenwiesen-Pfaffenhofen (DE)
(72) Erfinder: SEIDEL, Henning, 22941 Bargteheide (DE); MEIER, Leonhard, 83547 Babensham (DE); VOGGENAUER, Robert, 83512 Wasserburg (DE); WARDA, Rolf, 50937 Köln (DE); SCHUNK, Stephan, 48151 Münster (DE); WACHS, Tilo, 53424 Remagen (DE)
(74) Vertreter: Busch, Tobias
(86) Internationale Anmeldenummer: PCT/EP2014/003389
(87) Internationale Veröffentlichungsnummer: WO 2015/090577

(56) Entgegenhaltungen:
- EP-A2- 1 400 348
- EP-B1- 2 263 867
- US-A- 5 169 712

## Beschreibung

Die Erfindung betrifft ein Laminatfußbodenelement mit einem Träger auf dem eine Dekorschicht angeordnet ist.

Laminatböden sind seit vielen Jahrzehnten bekannt. Bei der Verlegung von Laminatböden werden Elemente aneinander gereiht, die z.B. als Paneele oder Dielen ausgeführt sein können. Häufig kommen dabei Klicksysteme zum Einsatz, welche die einzelnen Laminatfußbodenelemente miteinander verbinden.

Zur Herstellung von Laminatfußbodenelementen wird auf einen Träger eine Dekorschicht aufgebracht. Auf der Dekorschicht sind häufig Motive aufgedruckt, beispielsweise Holzstrukturen.

In der EP 2 263 867 B1 wird ein Laminatfußbodenelement mit einem Träger beschrieben auf dem eine obere Schicht aufgebracht ist. An der Außenseite der oberen Schicht ist eine Folienschicht aus einem elastischen Kunststoff vorgesehen. Dabei kommen beispielsweise Folien aus Polypropylen, Polyethylen, Polyurethan und/oder Polyvinylchlorid zum Einsatz.

Aufgabe der vorliegenden Erfindung ist es, ein Laminatfußbodenelement zur Verfügung zu stellen, das beim Einsatz als Bodenbelag eine gute Schalldämpfung und eine angenehme Haptik gewährleistet. Weiterhin soll eine ansprechende optische Wahrnehmung erzielt werden. Das Laminatfußbodenelement soll sich zudem durch geringe Verschleißneigung und ein möglichst geringes spezifisches Gewicht auszeichnen. Weiterhin soll es möglichst kostengünstig herzustellen sein.

Diese Aufgabe wird erfindungsgemäß dadurch gelöst, dass die Dekorschicht mindestens eine mikroporöse thermoplastische Folie aufweist.

Der Einsatz einer mikroporösen thermoplastischen Folie als Dekorschicht bietet besondere Vorteile. Durch die Porenstruktur wird eine gute Schalldämpfung erzielt. Dadurch kann bei den erfindungsgemäßen Laminatfußböden je nach Anwendungsfall ggf. sogar auf eine zusätzliche Trittschalldämmung verzichtet werden. Zudem gewährleistet der erfindungsgemäße Laminatfußboden eine angenehme Haptik. Die mikroporöse Folie weist gegenüber herkömmlichen Dekorschichten gute Isoliereigenschaften auf, so dass beim Kontakt mit dem Boden eine warme Oberfläche wahrgenommen wird.

Daneben sind im Stand der Technik mikroporöse Schichten bekannt, die nicht als Dekorschichten sondern als Membranen zum Einsatz kommen. So beschreibt die EP 1 400 348 A2 eine Dachunterspannbahn. Diese umfasst einen atmungsaktiven Stoff mit einer Membran. Der Stoff umfasst eine faserförmige, polymere Spinnvlieslage umfasst. Die Membran und die faserförmige, polymere Spinnvlieslage sind zusammen laminiert. Die Membran umfasst eine mikroperforierte metallisierte Folie.

Bisher wurde der Einsatz von thermoplastischen Folien mit Öffnungen grundsätzlich nicht in Betracht gezogen, da man davon ausging, dass die Öffnungen Druckfarbe aufsaugen und dadurch das Druckbild derart verfälscht wird, dass Folien mit Öffnungen als schlecht bedruckbar galten. Insbesondere für die filigranen Holzdekormotive im Laminatfußbodenbereich werden bei herkömmlichen Dekorschichten glatte, geschlossene Polymerfolien eingesetzt.

Erstaunlicherweise stellte sich nun heraus, dass mikroporöse thermoplastische Folien besonders günstige Eigenschaften beim Einsatz als Dekorschicht in Fußbodenlaminaten haben. Dabei wurde festgestellt, dass gegenüber herkömmlichen Papieren der Druckfarbenverbrauch reduziert werden konnte. Die mikroporösen Strukturen führen zu einer besonders intensiven optischen Deckkraft, die vermutlich auf Lichtbrechungseffekte zurückzuführen sind.

Die Mikroporosität führt zu einer Reduzierung der chemischen Wechselwirkungen. Bei unifarbenem Laminat wurde festgestellt dass sogar keine Bedruckung erforderlich ist, da ein Einsatz einer eingefärbten mikroporösen thermoplastischen Dekorfolie auch ohne Bedruckung zu einer besonders ansprechenden Optik führte.

Bei einer Variante der Erfindung ist auf der mikroporösen Dekorschicht ein Overlay angeordnet. Diese Deckschicht bildet die oberste Lage des Laminatbodens. Als Overlay kann beispielsweise ein Lack zum Einsatz kommen.

Bei einer besonders günstigen Variante der Erfindung wird als Overlay mindestens eine thermoplastische Folie oder Beschichtung aus z.B. thermoplastischen Polyurethan, thermoplastischen Elastomeren, Polypropylen und/oder Polyethylen eingesetzt. Vorzugsweise handelt es sich dabei um eine hochtransparente Polyurethanfolie. Dabei hat sich herausgestellt, dass ein besonders guter Schutz gegen Verfärbungen unter Einfluss von Licht und Wärme erzielt wird, wenn als Isocyanat-Komponente zur Erzeugung des thermoplastischen Polyurethans ein aliphatisches Isocyanat eingesetzt wird.

Das erfindungsgemäße Overlay auf Basis eines thermoplastischen Polyurethans weist eine Dicke von 30-500 µm auf, vorzugsweise 40-150 µm. Dieses Overlay ist äußerst abrieb-und kratzfest. Bei einer bevorzugten Variante sind das Overlay und die mikroporöse thermoplastische Dekorschicht durch einen Kleber miteinander verbunden.

Insbesondere geeignet als Dekorschicht bei Laminatfußbodenelementen erweisen sich orientierte mikroporöse Folien. Diese orientierten mikroporösen Folien werden durch Verstrecken hergestellt. In einem Orientierungsschritt wird eine Folie bei Streckverhältnissen je Streckrichtung von 1,2-10 uniaxial oder biaxial gestreckt. Bei den Streckverfahren können Walzen und/oder Spannrahmen oder andere geeignete Streckverfahren eingesetzt werden.

Vorzugsweise weist die Dekorschicht Zellen mit Mikrohohlräumen und verbindende Poren zwischen den Zellen auf mit einem mittleren Durchmesser der Poren von kleiner 10 µm, vorzugsweise kleiner als 5 µm, besonders kleiner als 2 µm. Bestimmt wird der Porendurchmesser nach der Quecksilberporosimetrie.

Als besonders geeignet haben sich mikroporöse Folien mit einer Wasserdampfdurchlässigkeit von mehr als 500 g/m²/24h erwiesen. Die Wasserdampfdurchlässigkeit wird dabei gemäß ASTM E-96, Verfahren E, bestimmt.

Es sind jedoch auch Varianten mit mikroporösen Folien mit wesentlich niedrigeren Wasserdampfdurchlässigkeiten denkbar.

Vorzugsweise wird als Dekorschicht eine mikroporöse thermoplastische Folie eingesetzt, die durch ein Verfahren hergestellt wurde, das mindestens folgende Schritte umfasst:
1.) Bilden einer Folie aus einer polymere Zusammensetzung,
2.) Strecken der Folie in wenigstens eine Richtung.

Dabei erweisen sich insbesondere Folien mit einem Streckverhältnis von 1,2-10 als besonders günstig. Dieses Streckverhältnis führt zu einer mikroporösen Struktur, die für die Anwendung als Dekorfolien in Laminatfußböden sehr günstig ist.

Bei einer vorteilhaften Variante der Erfindung wird die aus der polymeren Zusammensetzung gebildete Folie vor dem Strecken erwärmt vorzugsweise auf eine Temperatur zwischen 35° bis 140 °C.

Die zur Bildung der Folie eingesetzte polymere Zusammensetzung besteht vorzugsweise aus einem Ethylen-Propylen-Blockcopolymer. Diese wird im Folgenden als Komponente A bezeichnet und liegt mit 5-95 Gewichtsanteilen vor. Sie ist vorzugsweise ein Ethylen-Propylen-Blockcopolymer mit einem Ethylengehalt von 10-50 Gew.-%.

Als günstig hat es sich erwiesen, wenn die polymere Zusammensetzung ergänzend oder alternativ eine Komponente B umfasst, die ein Propylen-Homopolymer oder ein statistisches Copolymer von Propylen ist. Dieses weist vorzugweise bis zu 10 Gew.-% eines Comonomers von Ethylen oder eines α-Olefins mit 4 bis 8 Kohlenstoffatomen auf. Die Komponente B liegt vorzugsweise mit 5-40 Gewichtsanteilen in der polymeren Zusammensetzung vor.

Bei einer Variante der Erfindung umfasst die polymere Zusammensetzung zudem eine Komponente C mit 1 bis 20 Gewichtsanteilen. Die Komponente C ist ein Polypropylen mit niedrigem Molekulargewicht, das eine Schmelzviskosität von 50 bis 1.000 Poise, gemessen bei einer Schergeschwindigkeit von 136 sec⁻¹ und 190°C, aufweist. Die Komponente C kann durch die Komponente B zur Verfügung gestellt werden, wenn die Komponente B eine so breite Molekulargewichtsverteilung aufweist, dass der Teil der Komponente C, der in der polymeren Zusammensetzung benötigt wird, in dem Materials mit niedrigem Molekulargewicht der Komponente B enthalten ist.

Es kann zudem eine Komponente D in der polymeren Zusammensetzung vorhanden sein, die Calciumcarbonat umfasst. Die Komponente D kann in 0 bis 30 Gewichtsteilen, pro 100 Gewichtsteilen der Komponenten A, B und C vorliegen.

Erstaunlicherweise hat sich gezeigt, dass mikroporöse Folien als Dekorschicht von Laminatfußbodenelementen besonders geeignet sind, wenn diese aus einer polymere Zusammensetzung herstellt werden, die keinen anorganischen Füllstoff, wie beispielsweise Calciumcarbonat aufweist. Diese füllstofffreien mikroporösen thermoplastischen Folien haben sich beim Bedrucken als besonders hochwertig erwiesen, da keine störenden Einschlüsse vorhanden sind.

Zur Herstellung dieser füllstofffreien mikroporösen Folie kommt vorzugsweise eine Komponente E in der polymeren Zusammensetzung zum Einsatz, die einen Keimbildner umfasst, vorzugsweise einen beta-Sphärolith-Keimbildner. Insbesondere haben sich 0 bis 50 ppm an Keimbildner in der polymeren Zusammensetzung als günstig erwiesen.

Die Dichte der erfindungsgemäßen mikroporösen thermoplastischen Dekorschicht beträgt vorzugsweise weniger als 800 kg/m³ insbesondere weniger als 750 kg/m³. Die Dicke der mikroporösen Folie beträgt vorzugsweise mehr als 10 µm und weniger als 500 µm, insbesondere mehr als 30 µm und weniger als 200 µm.

Zur Herstellung der erfindungsgemäßen Laminatfußbodenelemente wird zunächst eine Folie aus einer polymeren Zusammensetzung gebildet. Diese Folie wird verstreckt, vorzugsweise mit einem Streckverhältnis von 1,2-10. Die mikroporöse Folie wird bedruckt und auf dem Träger des Laminatfußbodens aufgebracht.

Das Aufbringen kann mittels eines Klebers und/oder durch Druck bzw. Wärme erfolgen. Die erfindungsgemäße mikroporöse thermoplastische Dekorschicht wird in einem Laminier- und/oder Kaschiervorgang ggf. unter Verwendung von Harzen mit Trägern verbunden. Als Träger kommen Spanplatten oder mitteldichte (MDF) bzw. hochdichte (HDF) Holzfaserplatten oder auch thermoplastische Trägerplatten zum Einsatz.

Vorzugsweise kommt zur Verbindung der mikroporösen Deckschicht mit dem Träger ein feuchtigkeitsvernetzender, isocyanatfreier Schmelzklebstoff mit hoher Anfangsfestigkeit und kurzer offener Zeit zum Einsatz.

Anschließend kann das Overlay als Deckschicht beispielsweise in Form eines Lackes aufgebracht werden.

Bei einer besonders günstigen Variante kommt ein Verfahren zum Einsatz, bei dem zunächst die mikroporöse thermoplastische Dekorschicht mit einem Overlay verbunden wird. Dabei erweist sich ein Folien-Kaschierverbund aus der mikroporösen thermoplastischen Folie und einer Polyurethan-Folie aus einem thermoplastischen Polyurethan als besonders vorteilhaft.

Bei einer alternativen Variante der Erfindung wird das Overlay rückseitig bedruckt und mit einer nicht bedruckten mikroporösen thermoplastischen Folie als Dekorschicht verbunden. Vorzugsweise wird dabei ein Overlay aus einer Polyurethan-Folie eingesetzt. Die Polyurethan-Folie wird an ihrer Unterseite bedruckt. Sie ist zudem oberseitig prägbar. Die unterseitig bedruckte und oberseitig geprägte Polyurethan-Folie wird mit der mikroporösen Folie verbunden. Dabei entsteht ein Verbund aus Träger, mikroporöser Folie und Overlay.

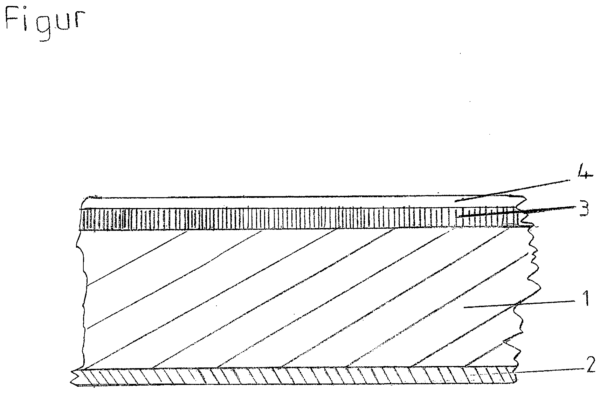

Weitere Merkmale und Vorteile der Erfindung ergeben sich aus der Beschreibung eines Ausführungsbeispiels anhand einer Zeichnung und aus der Zeichnung selbst.

Dabei zeigt die einzige Figur eine Schnittansicht eines Laminatfußbodenelementes.

Im Ausführungsbeispiel handelt es sich bei dem Laminatfußbodenelement um einen Laminatbodenpaneel. Das Laminatfußbodenelement hat die Form eines langgestreckten Rechtecks und weist eine Dicke von mehr als 5 mm auf.

Das Laminatfußbodenelement umfasst einen Träger 1. Bei dem Träger 1 handelt es sich im Ausführungsbeispiel um eine Platte aus HDF oder MDF. Die Dicke des Trägers 1 beträgt vorzugsweise mehr als 4 mm. Nicht dargestellt ist, dass das Laminatfußbodenelement im Bereich des Trägers 1 randseitig profiliert ist. Durch die Profilierung können die Laminatfußbodenelemente form- und/oder reibschlüssig verbunden werden. Im Ausführungsbeispiel handelt es sich dabei um ein Click-Verbindungs-Profil, nach Art eines Nut-Feder-Systems.

Unterseitig ist ein Gegenzug 2 angeordnet. Bei dem Gegenzug 2 handelt es sich um eine Schicht, die zur Formstabilität des Trägers 1 beiträgt. Der Gegenzug 2 dient dazu, dass sich das Laminat bei Belastung durch die auftretenden Biegekräfte nicht verformt.

Erfindungsgemäß weist das Laminatfußbodenelement eine Dekorschicht 3 auf, die mindestens eine mikroporöse Folie umfasst. Im Ausführungsbeispiel besteht die Dekorschicht 3 aus der mikroporösen Folie selbst. Die Dekorschicht 3 ist mit dem Träger 1 mittels eines Klebers verbunden.

Auf der Dekorschicht 3 ist ein Overlay 4 angeordnet. Das Overlay 4 besteht im Ausführungsbeispiel aus einer elastischen Polyurethanfolie. Das die Polyurethanfolie bildende Polyurethan ist dabei ein Polyurethan auf Basis aliphatischer Isocyanate. Das Overlay 4 ist mit der Dekorschicht 3 mittels eines Klebers verbunden.

Die erfindungsgemäße mikroporöse thermoplastische Dekorschicht 3 weist Zellen mit Mikrohohlräumen und verbindenden Poren zwischen den Zellen auf.

Die mikroporöse Dekorschicht 3 wird nach einem Verfahren hergestellt, das folgende Schritte umfasst:
- Bilden einer Folie aus einer polymeren Zusammensetzung,
- Erwärmen der Folie bei einer Temperatur von 35° bis 140°C,
- Strecken der erwärmten Folie in wenigstens eine Richtung bei einem Streckverhältnis von 1,2 bis 10.

Die polymere Zusammensetzung umfasst
- 40 bis 90 Gewichtsteile einer Komponente A, die ein Ethylen-Propylen-Blockcopolymer mit einem Ethylengehalt von 10 bis 50 Gew.-% umfasst,
- 5 bis 40 Gewichtsteile einer Komponente B, welche ein Propylen-Homopolymer oder ein statistisches Copolymer von Propylen mit bis zu 10 Gew.-% eines Comonomers von Ethylen oder eines α-Olefins mit 4 bis 8 Kohlenstoffatomen umfasst,
- 1 bis 20 Gewichtsteile einer Komponente C, welche ein Polypropylen mit niedrigem Molekulargewicht umfasst, das eine Schmelzviskosität von 50 bis 1.000 Poise, gemessen bei einer Schergeschwindigkeit von 136 sec⁻¹ und 190°C, aufweist, und wobei die Komponente C durch die Komponente B zur Verfügung gestellt werden kann, wenn die Komponente B eine so breite Molekulargewichtsverteilung aufweist, daß der Teil der Komponente C, der in der polymeren Zusammensetzung benötigt wird, in dem Material mit niedrigem Molekulargewicht der Komponente B enthalten ist;
- 0 bis 30 Gewichtsteile, pro 100 Gewichtsteilen der Komponenten A, B und C, einer Komponente D, welche Calciumcarbonat umfaßt,
- 0 bis 50 ppm, pro 100 Gewichtsteilen der Komponenten A, B und C, einer Komponente E, welche einen beta-Sphärolith-Keimbildner umfasst, unter der Voraussetzung, dass die Komponente C vorliegt mit
   (a) 5 bis 20 Gewichtsteilen, wenn die polymere Zusammensetzung im wesentlichen frei von der Komponente D oder den Komponenten D und E ist,
   (b) 1 bis 10 Gewichtsteilen, wenn die polymere Zusammensetzung 0,1 bis 10 ppm der Komponente E und 5 bis 30 Gewichtsteile der Komponente D aufweist.

Die Folie, welche aus der polymeren Zusammensetzung gebildet wird, wird durch ein geeignetes Erwärmungsmittel erwärmt, so dass die Folie die gewünschte Temperatur in einer so kurzen Zeit wie möglich erreicht, während die Eigenschaften der Folie beibehalten werden. Typischerweise werden Heizwalzen verwendet, um die Folie auf die gewünschte Orientierungstemperatur aufzuwärmen.

Für Folien, welche gleichzeitig in beide Richtungen gestreckt werden, reicht eine Temperatur von 40° bis 95 °C. Für Folien, die aus Zusammensetzungen gebildet werden, welche auf Polypropylen basieren, werden die Folien vorzugsweise auf 70° bis 85 °C erwärmt.

Die gewünschte Temperatur zur Orientierung in der Maschinenrichtung kann von 40° bis 95 °C reichen, mit einem bevorzugten Temperaturbereich von 60° bis 70 °C.

Bei der anschließenden Orientierung in Querrichtung kann die gewünschte Temperatur von 75° bis 140 °C reichen, mit einem bevorzugten Temperaturbereich von 105° bis 130 °C.

Versuche, Folien bei Temperaturen zu orientieren, die außerhalb der bevorzugten Temperaturbereiche liegen, erzeugen typischerweise keine Folien mit den gewünschten Porositäts- und Festigkeitseigenschaften.

Zusätzlich zu dem Orientierungstyp beeinflußt die Zusammensetzung der Folie ebenfalls die Orientierungstemperatur. Für Folien, welche Ethylen-Propylen-Blockcopolymer, Polypropylen-Homopolymer oder ein statistisches Copolymer von Propylen und Polyolefin mit niedrigem Molekulargewicht umfassen, werden die Folien vorzugsweise auf eine Temperatur von 50° bis 80 °C erwärmt.

Für Folien, welche Ethylen-Propylen-Blockcopolymer, Propylen-Homopolymer oder ein statistisches Copolymer, Polyolefin mit niedrigem Molekulargewicht, einen beta-Sphärolith-Keimbildner und/oder einen anorganischen Füllstoff wie z. B. Calciumcarbonat umfassen, werden die Folien vorzugsweise auf eine Temperatur in dem Bereich von 35° bis 140 °C erwärmt.

In dem Orientierungschritt kann die erwärmte Folie uniaxial oder biaxial gestreckt werden. Eine uniaxiale Streckung kann durchgeführt werden, indem Walzen zusammen mit einer Walze und/oder einem Zugrahmen zum Festhalten der Folie verwendet werden. Eine biaxiale Streckung kann aufeinanderfolgende uniaxiale Streckschritte einschließen. Diese können eine Streckung in Längsrichtung durch Walzen und/oder eine Querstreckung durch Streckrahmen umfassen. Für die biaxiale Streckung kann das Streckverhältnis in der Längs- oder Maschinenrichtung und in der Querrichtung gleich oder verschieden sein. Im Allgemeinen sind die Streckverhältnisse in beiden Richtungen gleich. Das Streckverhältnis für sowohl die uniaxiale als auch die biaxiale Orientierung kann 1,2 bis 10 je Streckrichtung betragen.

Die Menge an Keimbildner zur Bildung der porösen Dekorschicht des Fußbodenlaminatelements hängt von dessen Wirksamkeit ab. Im Ausführungsbeispiel wird ein beta-Sphärolith-Keimbildner verwendet, der einen Chinacridon-Farbstoff umfasst, welcher im folgenden als "Q-Farbstoff" bezeichnet wird.

Für den Q-Farbstoff kann die Menge, welche in den polymeren Zusammensetzungen vorliegt, von 0,01 bis 50 ppm pro Gewicht reichen. Es wird ausreichend Keimbildner eingesetzt, um die Bildung von 20 Gew.-% oder mehr beta-Sphärolithen in der Folie zu induzieren. Vorzugsweise werden 0,1 bis 30 ppm pro Gewicht des Q-Farbstoffs verwendet.

## Patentansprüche

1. Laminatfußbodenelement mit einem Träger (1) aus der Gruppe Spanplatten oder mitteldichte (MDF) oder hochdichte (HDF) Holzfaserplatten oder thermoplastische Trägerplatten auf dem eine Dekorschicht (3) verbunden ist,
**dadurch gekennzeichnet, dass** die Dekorschicht (3) mindestens eine mikroporöse thermoplastische Folie aufweist.

2. Laminatfußbodenelement nach Anspruch 1, **dadurch gekennzeichnet, dass** auf der Dekorschicht (3) ein Overlay (4) angeordnet ist, das mindestens eine thermoplastische Folie aufweist, insbesondere eine Polyurethan-Folie aus einem thermoplastischen Polyurethan.

3. Laminatfußbodenelement nach Anspruch 1 oder 2, **dadurch gekennzeichnet, dass** die mikroporöse Folie Zellen mit Mikrohohlräumen und verbindende Poren zwischen den Zellen aufweist.

4. Laminatfußbodenelement nach einem der Ansprüche 1-3, **dadurch gekennzeichnet, dass** der mittlere Durchmesser der Poren der mikroporösen Folie kleiner als 10 µm, vorzugsweise kleiner als 5 µm, insbesondere kleiner als 2 µm ist.

5. Laminatfußbodenelement nach einem der Ansprüche 1-4, **dadurch gekennzeichnet, dass** die mikroporöse Folie eine Wasserdampfdurchlässigkeit von 500 g/m²/24h oder größer aufweist, die gemäß ASTM E 96 Verfahren E bestimmt wurde.

6. Laminatfußbodenelement nach einem der Ansprüche 1-5, **dadurch gekennzeichnet, dass** die mikroporöse Folie durch ein Verfahren hergestellt wurde, das folgende Schritte umfasst:
- Bilden einer Folie aus einer polymere Zusammensetzung,
- Strecken der Folie in wenigstens eine Richtung.

7. Laminatfußbodenelement nach Anspruch 6, **dadurch gekennzeichnet, dass** die polymere Zusammensetzung eine Ethylen-Propylen-Komponente und/oder eine Propylen-Komponente umfasst.

8. Laminatfußbodenelement nach Anspruch 6 oder 7, **dadurch gekennzeichnet, dass** die polymere Zusammensetzung keinen anorganischen Füllstoff aufweist.

9. Laminatfußbodenelement nach einem der Ansprüche 6-8, **dadurch gekennzeichnet, dass** die polymere Zusammensetzung einen Keimbildner aufweist, vorzugsweise einen beta-Sphärolith-Keimbildner.

10. Laminatfußbodenelement nach einem der Ansprüche 1-9, **dadurch gekennzeichnet, dass** die Dichte der mikroporösen Folie weniger als 800 kg/m³, insbesondere weniger als 750 kg/m³, beträgt.

11. Laminatfußbodenelement nach einem der Ansprüche 1-10, **dadurch gekennzeichnet, dass** die Dicke der mikroporösen Folie mehr als 10 µm und weniger als 500 µm, insbesondere mehr als 30 µm und weniger als 200 µm beträgt.

12. Verfahren zur Herstellung eines Laminatfußbodenelements, insbesondere eines Laminatfußbodenelements nach einem der Ansprüche 1-11, mit folgenden Schritten:
- Bilden einer Folie aus einer polymeren Zusammensetzung,
- Strecken der Folie in wenigstens einer Richtung zur Bildung mikroporöser Strukturen,
- Aufbringen der Folie als Dekorschicht (3) auf einen Träger (1),
- Verbinden der Dekorschicht (1) in einem Laminier- und/oder Kaschiervorgang mit dem Träger (1).

13. Verfahren nach Anspruch 12, **dadurch gekennzeichnet, dass** die Folie zur Bildung mikroporöser Strukturen mit einem Streckverhältnis von 1,2 - 10 je Streckrichtung gestreckt wird.

14. Verfahren nach Anspruch 12 oder 13, **dadurch gekennzeichnet, dass** die mikroporöse Folie bedruckt wird.

15. Verfahren nach einem der Ansprüche 12-14, **dadurch gekennzeichnet, dass** auf die mikroporöse Folie ein Overlay (4) aufgebracht wird, das mindestens eine Polyurethan-Folie aus einem thermoplastischen Polyurethan aufweist.

## Claims

1. Laminate flooring element with a support (1) from the group of chipboards or medium-density wood-fibre boards (MDF) or high-density wood-fibre boards (HDF) or thermoplastic supportive boards on which a decorative layer (3) has been bonded, **characterized in that** the decorative layer (3) comprises at least one microporous thermoplastic film.

2. Laminate flooring element according to Claim 1, **characterized in that**, arranged on the decorative layer (3), there is an overlay (4) which comprises at least one thermoplastic film, in particular a polyurethane film made of a thermoplastic polyurethane.

3. Laminate flooring element according to Claim 1 or 2, **characterized in that** the microporous film comprises cells with microcavities and comprises connecting pores between the cells.

4. Laminate flooring element according to any of Claims 1-3, **characterized in that** the average diameter of the pores of the microporous film is below 10 µm, preferably below 5 µm, in particular below 2 µm.

5. Laminate flooring element according to any of Claims 1-4, **characterized in that** the water vapour transmission rate of the microporous film, measured in accordance with ASTM E96 method E, is greater than or equal to 500 g/m²/24h.

6. Laminate flooring element according to any of Claims 1-5, **characterized in that** the microporous film was produced by a process comprising the following steps:
- formation of a film made of a polymeric composition,
- stretching of the film in at least one direction.

7. Laminate flooring element according to Claim 6, **characterized in that** the polymeric composition comprises an ethylene-propylene component and/or a propylene component.

8. Laminate flooring element according to Claim 6 or 7, **characterized in that** the polymeric composition comprises no inorganic filler.

9. Laminate flooring element according to any of Claims 6-8, **characterized in that** the polymeric composition comprises a nucleating agent, preferably a beta-spherulite nucleating agent.

10. Laminate flooring element according to any of Claims 1-9, **characterized in that** the density of the microporous film is below 800 kg/m³, in particular below 750 kg/m³.

11. Laminate flooring element according to any of Claims 1-10, **characterized in that** the thickness of the microporous film is above 10 µm and below 500 µm, in particular above 30 µm and below 200 µm.

12. Process for the production of a laminate flooring element, in particular of a laminate flooring element according to any of Claims 1-11, with the following steps:
- formation of a film made of a polymeric composition,
- stretching of the film in at least one direction for the formation of microporous structures,
- application of the film as decorative layer (3) to a support (1),
- bonding of the decorative layer (3) in a lamination and/or laminating procedure to the support (1).

13. Process according to Claim 12, **characterized in that** in order to form microporous structures the film is stretched with a stretching ratio of from 1.2 to 10, depending on stretching direction.

14. Process according to Claim 12 or 13, **characterized in that** the microporous film is printed.

15. Process according to any of Claims 12-14, **characterized in that** an overlay (4) which comprises at least one polyurethane film made of a thermoplastic polyurethane is applied to the microporous film.

## Revendications

1. Élément de plancher en laminé doté d'un support (1) choisi dans le groupe des panneaux de particules ou des panneaux de fibres de bois à densité moyenne (MDF) ou à haute densité (HDF) ou des plaques de support thermoplastiques sur lequel est assemblé une couche décorative (3), **caractérisé en ce que** la couche décorative (3) présente au moins une feuille thermoplastique microporeuse.

2. Élément de plancher en laminé selon la revendication 1, **caractérisé en ce qu'**un overlay (4), qui présente au moins une feuille thermoplastique, en particulier une feuille de polyuréthane à base d'un polyuréthane thermoplastique, est disposé sur la couche décorative (3).

3. Élément de plancher en laminé selon la revendication 1 ou 2, **caractérisé en ce que** la feuille microporeuse présente des cellules pourvues de microcavités et des pores de liaison entre les cellules.

4. Élément de plancher en laminé selon l'une quelconque des revendications 1-3, **caractérisé en ce que** le diamètre moyen des pores de la feuille microporeuse est inférieur à 10 µm, préférablement inférieur à 5 µm, en particulier inférieur à 2 µm.

5. Élément de plancher en laminé selon l'une quelconque des revendications 1-4, **caractérisé en ce que** la feuille microporeuse présente une perméabilité à la vapeur d'eau supérieure ou égale à 500 g/m²/24 h, qui a été mesurée selon ASTM E 96 méthode E.

6. Élément de plancher en laminé selon l'une quelconque des revendications 1-5, **caractérisé en ce que** la feuille microporeuse a été fabriquée selon un procédé qui comprend les étapes suivantes :
- formation d'une feuille à partir d'une composition polymère,
- étirage de la feuille dans au moins une direction.

7. Élément de plancher en laminé selon la revendication 6, **caractérisé en ce que** la composition polymère comprend un composant d'éthylène-propylène et/ou un composant de propylène.

8. Élément de plancher en laminé selon la revendication 6 ou 7, **caractérisé en ce que** la composition polymère ne présente aucune charge inorganique.

9. Élément de plancher en laminé selon l'une quelconque des revendications 6-8, **caractérisé en ce que** la composition polymère présente un agent de nucléation, de préférence un agent de nucléation de type bêta-sphérulite.

10. Élément de plancher en laminé selon l'une quelconque des revendications 1-9, **caractérisé en ce que** la densité de la feuille microporeuse est inférieure à 800 kg/m³, en particulier inférieure à 750 kg/m³.

11. Élément de plancher en laminé selon l'une quelconque des revendications 1-10, **caractérisé en ce que** l'épaisseur de la feuille microporeuse est supérieure à 10 µm et inférieure à 500 µm, en particulier supérieure à 30 µm et inférieure à 200 µm.

12. Procédé pour la fabrication d'un élément de plancher en laminé, en particulier d'un élément de plancher en laminé selon l'une quelconque des revendications 1-11, comportant les étapes suivantes :
- formation d'une feuille à partir d'une composition polymère,
- étirage de la feuille dans au moins une direction pour la formation de structures microporeuses,
- application de la feuille en tant que couche décorative (3) sur un support (1),
- assemblage de la couche décorative (3) avec le support (1) selon un processus de laminage ou de contre-collage.

13. Procédé selon la revendication 12, **caractérisé en ce que** la feuille est étirée avec un rapport d'étirage de 1,2-10 par direction d'étirage, pour la formation de structures microporeuses.

14. Procédé selon la revendication 12 ou 13, **caractérisé en ce que** la feuille microporeuse est imprimée.

15. Procédé selon l'une quelconque des revendications 12-14, **caractérisé en ce qu'**un overlay (4) est appliqué sur la feuille microporeuse, qui présente au moins une feuille de polyuréthane à base d'un polyuréthane thermoplastique.
